# FASCICULE DE BREVET EUROPEEN

(11) **EP 4 087 772 B1**
(45) Date de publication et mention de la délivrance du brevet: **23.08.2023**
(21) Numéro de dépôt: 21704602.8
(22) Date de dépôt: 07.01.2021
(51) Int. Cl.: B62D 63/06

(54) **REMORQUE DE TRANSPORT COMPRENANT UN SYSTÈME D'INCLINAISON ET DE REDRESSEMENT DE SON PLATEAU**
TRANSPORTANHÄNGER MIT EINEM SYSTEM ZUM KIPPEN UND AUFRICHTEN SEINES DECKS
TRANSPORT TRAILER COMPRISING A SYSTEM FOR TILTING AND RIGHTING ITS DECK

(30) Priorité: 08.01.2020 FR 2000132
(43) Date de publication de la demande: 16.11.2022
(73) Titulaire: Cochet, 72130 Sougé-le-Ganelon (FR)
(72) Inventeur: COCHET, Ludovic, 72130 SOUGÉ-LE-GANELON (FR)
(74) Mandataire: Lefevre-Groboillot, David André
(86) Numéro de dépôt international: PCT/FR2021/050017
(87) Numéro de publication internationale: WO 2021/140299

(56) Documents cités:
- EP-A1- 1 918 181
- US-A- 4 077 643
- US-A- 5 924 836
- US-A1- 2007 018 429
- US-A1- 2010 084 839

## Description

L'invention a trait à une remorque de transport inclinable et apte à être redressée, et plus particulièrement à une remorque ouverte de type plate-forme permettant à un utilisateur de charger et décharger seul des objets lourds et/ou encombrants sur une plate-forme de la remorque et par ailleurs apte à être stockée en position redressée.

Dans le domaine automobile, les remorques ouvertes sont couramment utilisées pour transporter des objets et/ou des matériaux trop volumineux pour rentrer dans un véhicule fermé, pouvant salir un tel véhicule fermé ou encore pour augmenter la capacité de transport d'un véhicule tracteur. Une telle remorque ouverte peut éventuellement être, aux fins d'une utilisation donnée, fermée ou partiellement fermée à l'aide d'une bâche ou de toute structure amovible, puis rouverte pour une autre utilisation.

Les remorques comprennent généralement un plateau disposé pour le roulage sensiblement parallèle au sol et sur lequel sont placés les objets et/ou les matériaux à transporter.

Cependant, les plateaux des remorques sont disposés à une certaine distance du sol rendant difficile le chargement et le déchargement des objets et/ou des matériaux lourds et/ou encombrants.

Il est connu, pour faciliter le chargement et le déchargement d'une remorque, de proposer une remorque comprenant un plateau inclinable vers l'arrière de la remorque de sorte que l'arrière du plateau soit, en phase de chargement ou de déchargement, au contact du sol afin de définir une pente par rapport au sol. Ainsi, il est aisé pour un utilisateur de faire rouler l'objet (l'objet possédant au moins une roue ou étant par exemple posé sur un diable) ou le matériau (le matériau étant par exemple dans une brouette) à charger depuis le sol sur le plateau ou à décharger depuis le plateau vers le sol.

Le document WO 2019/162433 A1 décrit un exemple d'une telle remorque. Une remorque décrite dans ce document comprend un treuil fixé sur un cadre et un câble relié à un essieu de la remorque. L'axe des roues étant déporté par rapport à l'axe de l'essieu, le treuil est apte, en déroulant le câble, à faire pivoter l'essieu par rapport au plateau, ce qui entraine l'abaissement de l'axe de l'essieu par rapport à l'axe des roues permettant d'augmenter l'inclinaison du plateau par rapport au sol jusqu'au contact de l'arrière du plateau avec le sol. Le plateau définit ainsi une pente facilitant le chargement et le déchargement de la remorque. A l'inverse, pour disposer la remorque dans une position de roulage, le treuil est apte, en enroulant le câble, à faire pivoter l'essieu par rapport au plateau, ce qui entraine le rehaussement de l'axe de l'essieu par rapport à l'axe des roues permettant de réduire l'inclinaison du plateau par rapport au sol jusqu'à ce que le plateau soit sensiblement parallèle au sol.

Un autre problème lié aux remorques est leur encombrement lorsqu'elles ne sont pas utilisées.

En effet, une remorque ouverte, présentant généralement une surface au sol importante comparée à sa hauteur, occupe, lorsqu'elle est en position de roulage et n'est pas utilisée mais au contraire stockée par exemple dans un garage, une surface au sol importante et un volume vide au-dessus de la remorque difficile voire impossible à utiliser.

Il est connu, pour réduire l'encombrement d'une remorque non utilisée, de disposer la remorque dans une position dite redressée dans laquelle son plateau est disposé sensiblement perpendiculairement au sol. Ainsi, la surface au sol occupée par la remorque en position redressée est moins importante que lorsque la remorque est en position de roulage, ce qui diminue l'encombrement de la remorque.

La remorque décrite dans le document WO 2019/162433 A1, cité ci-dessus, est également apte à adopter une position redressée. Le plateau de la remorque décrite dans ce document, outre le fait qu'il est inclinable, est constitué d'une partie avant et d'une partie arrière articulées via un axe de pliage sensiblement parallèle à l'essieu. L'axe de pliage est disposé de sorte que la partie arrière soit repliable sur la partie avant du plateau et de sorte que des roues de la remorque dépassent à l'arrière dudit axe de pliage du plateau. La remorque vide peut ainsi être redressée en relevant son timon de sorte à faire pivoter les deux parties du plateau sur les roues jusqu'à ce que le plateau plié soit disposé sensiblement perpendiculairement au sol. La remorque comprend de plus une béquille dépliable pour maintenir la remorque pliée en position redressée.

Cependant, le redressement de la remorque est fait à la force de l'utilisateur. Ainsi, redresser une telle remorque peut être compliqué voire impossible en fonction de la masse de la remorque et de la force physique de l'utilisateur.

Le document WO 2008/147207 A1 décrit une remorque comprenant un timon articulé au plateau via un axe de pliage. La remorque comprend également un treuil monté sur une partie médiane du timon et un câble dont les extrémités sont fixées au treuil et à une partie centrale du plateau. En position de roulage, le timon et le plateau de la remorque sont disposés sensiblement parallèlement au sol. En enroulant le câble sur le treuil, la distance entre la partie centrale du plateau et la partie médiane du timon, auxquelles est fixé le câble, diminue. La remorque se redresse en prenant appui sur une partie arrière du plateau et sur une roulette disposée au niveau de la tête d'attelage de la remorque, ce qui entraine le rapprochement du timon vers le plateau par pivotement autour dudit axe de pliage.

Une telle remorque est ainsi apte à être convertie de la position de roulage à la position redressée et inversement en ne sollicitant l'utilisateur que pour l'actionnement du treuil. Ainsi, un utilisateur est apte à redresser une remorque ayant une masse importante. Mais cette remorque n'est pas commode à utiliser, le seuil de chargement étant élevé et ne pouvant pas être abaissé.
Le document n° US5924836 divulgue une remorque pliante et basculante ;
Le document n° US2010/0084839A1 divulgue une remorque pliante ;
Le document n° US2007/0018429A1 divulgue une remorque pliable avec charnière articulée et mécanisme en porte-à-faux.

L'objectif de l'invention est de proposer une remorque comprenant un plateau inclinable afin de faciliter le chargement et le déchargement de la remorque et apte à être disposée dans une position redressée, réduisant l'encombrement de la remorque lorsqu'elle n'est pas utilisée, en sollicitant l'utilisateur le moins possible.

A cet effet, il est proposé, en premier lieu, une remorque comprenant un cadre, un plateau solidaire du cadre, le plateau étant destiné à supporter des objets et/ou des matériaux à transporter, des roues solidaires du cadre, les roues étant destinées à reposer sur le sol, un timon en liaison pivot avec le cadre, la liaison pivot étant sensiblement parallèle aux axes des roues et permettant le repliement du timon contre la surface inférieure du plateau.

Le timon est en saillie du plateau dans une direction sensiblement perpendiculaire aux axes des roues, la remorque comprenant en outre un moyen de blocage de la liaison pivot et un système de conversion comprenant un moyen de traction, par exemple un élément longiligne souple non élastique solidaire du plateau et un dispositif de réglage de la longueur dudit élément, la longueur dudit élément définissant la distance d'au moins une partie du plateau par rapport au sol par pivotement du plateau autour d'une liaison pivot de chargement et déchargement parallèle aux axes des roues.

Par ailleurs, la remorque est de plus apte à être disposée dans une position redressée dans laquelle le plateau est sensiblement perpendiculaire au sol.

Une telle remorque permet ainsi d'abaisser le plateau de la remorque pour faciliter le chargement et le déchargement de celle-ci. Une telle remorque permet également de réduire son encombrement lorsqu'elle n'est pas utilisée en la positionnant dans la position redressée.

De plus, le dispositif de réglage de la longueur de l'élément longiligne souple, ou plus généralement, le dispositif de commande de l'élément de traction est fixé au timon, ou monté sur le timon. Ainsi, il peut provoquer la rotation du timon autour de son pivot, si le pivot est débloqué, et le redressement de la remorque sur ses roues.

Ainsi, le dispositif de conversion permet, outre de convertir la remorque entre les positions de roulage et abaissée, de convertir la remorque en position redressée. Cette dernière conversion ne sollicite que très peu l'utilisateur et permet la conception d'une remorque simple dans laquelle un unique dispositif de conversion permet de passer, en minimisant les efforts entre trois positions différentes.

Diverses caractéristiques supplémentaires peuvent être prévues, seules ou en combinaison :
- la remorque comprend des bras, chaque bras solidarisant une des roues au cadre, les bras étant en liaison pivot avec le cadre, les liaisons pivot étant différentes des axes des roues, la remorque comprenant en outre un moyen de blocage de la liaison pivot ;
- la remorque comprend une poulie solidaire du timon, la poulie comportant deux rouleaux disposés successivement sensiblement suivant la direction de saillie du timon, l'élément longiligne souple passant entre les deux rouleaux, en sorte d'être couplé à l'un ou l'autre en fonction de la position du timon vis-à-vis du plateau ;
- la remorque comprend une roulette solidaire du timon, la roulette étant apte à être escamotée entre les extrémités du timon ou à être dépliée à l'extrémité du timon opposée au plateau pour servir d'appui ;
- le plateau comprend une partie arrière et une partie avant mobiles l'une par rapport à l'autre par rotation autour d'un axe de pliage, l'axe de pliage étant disposé entre le timon et la partie des roues la plus éloignée du timon.

Il est proposé, en second lieu, un procédé de conversion d'une remorque entre une position de roulage dans laquelle des roues de la remorque reposent sur le sol, une position abaissée dans laquelle au moins une partie d'un plateau de la remorque est plus proche du sol que dans la position de roulage, le plateau étant destiné à supporter des objets et/ou des matériaux à transporter, et une position redressée dans laquelle le plateau est sensiblement perpendiculaire au sol, le procédé comprenant, pour convertir la remorque entre la position de roulage et la position abaissée, une variation d'une longueur d'un élément longiligne souple de la remorque, le procédé comprenant, pour convertir la remorque entre la position de roulage et la position abaissée, un blocage d'une liaison pivot d'un timon de la remorque avec un cadre de la remorque, le plateau étant solidaire du cadre et le timon s'étendant suivant une direction sensiblement perpendiculaire à ladite liaison pivot, et en ce qu'il comprend, pour convertir la remorque vers la position redressée, un déblocage de ladite liaison pivot et une modification de la longueur de l'élément longiligne souple.

Diverses caractéristiques supplémentaires peuvent être prévues, seules ou en combinaison :
- le procédé comprend en outre, pour convertir la remorque vers la position redressée, une disposition d'une roulette à l'extrémité du timon opposée au plateau et une réduction de la longueur de l'élément longiligne souple et le procédé comprend, pour convertir la remorque depuis la position redressée, une augmentation de la longueur de l'élément longiligne souple, une disposition de la roulette entre les extrémités du timon et le blocage de la liaison pivot ;
- le procédé comprend un pliage préalable d'une partie arrière et d'une partie avant du plateau l'une contre l'autre, des roues de la remorque dépassant du plateau à l'opposé du timon ;
- le pliage du plateau est réalisé lorsque la remorque est en position de roulage ;
- comprend, lorsque la remorque est en position redressée, un déplacement de la remorque sur ses roues et sa roulette.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
[Fig. 1] - la figure 1 est une vue schématique en perspective de dessus d'une remorque en position de roulage ;
[Fig. 2] - La figure 2 est une vue schématique en perspective de dessous de la remorque de la figure 1 en position de roulage ;
[Fig. 3] - La figure 3 est une vue schématique de dessous de la même remorque en position de roulage ;
[Fig. 4A] - La figure 4A est une vue schématique en coupe au niveau d'un plan G-G représenté sur la figure 3 du côté gauche de la remorque en position de roulage ;
[Fig. 4B] - La figure 4B est une vue schématique en coupe au niveau d'un plan D-D représenté sur la figure 3 du côté droit de la remorque en position de roulage, comme en figure 4A ;
[Fig. 5] - La figure 5 est une vue schématique en perspective de dessus de la remorque de la figure 1 en position abaissée ;
[Fig. 6A] - La figure 6A est une vue schématique en coupe au niveau du plan G-G du côté gauche de la remorque en position abaissée ;
[Fig. 6B] - La figure 6B est une vue schématique en coupe au niveau du plan D-D du côté droit de la remorque en position abaissée, comme en figure 6A ;
[Fig. 7] - La figure 7 est une vue schématique en perspective de la remorque de la figure 1 en position redressée, le plateau étant dans une position pliée ;
[Fig. 8A] - La figure 8A est une vue schématique en coupe au niveau du plan G-G du côté gauche de la remorque en position abaissée mais pas encore redressée, le plateau étant dans une position pliée ;
[Fig. 8B] - La figure 8B est une vue schématique en coupe au niveau du plan D-D du côté droit de la remorque en position abaissée mais pas encore redressée, le plateau étant dans la position pliée, comme en figure 8A ;
[Fig. 9] - La figure 9 est une vue schématique en coupe au niveau du plan D-D du côté droit de la remorque en position abaissée, le plateau étant dans la position pliée, une roulette étant dans une position déployée et une mâchoire étant dans une position ouverte, aux fins de procéder au redressement de la remorque ;
[Fig. 10] - La figure 10 est une vue schématique en coupe au niveau du plan D-D du côté droit de la remorque dans une position intermédiaire, entre la position représentée sur la figure 9 et la position redressée représentée sur la figure 7 ;
[Fig. 11] - La figure 11 est une vue schématique en coupe au niveau du plan D-D du côté droit de la remorque en position redressée, comme représenté sure la figure 7 ;
[Fig. 12] - La figure 12 est un organigramme représentant les étapes de conversion de la remorque de la position de roulage à la position abaissée et inversement ;
[Fig. 13] - La figure 13 est un organigramme représentant les étapes de conversion de la remorque de la position de roulage à la position redressée et inversement.

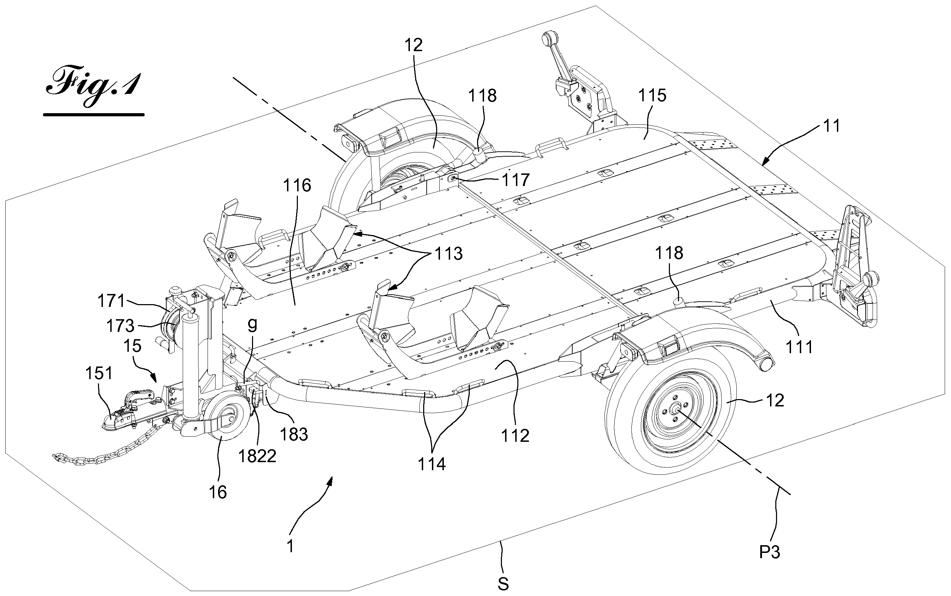

Les figures 1 à 11 représentent une remorque 1 comprenant un plateau 11 sensiblement rectangulaire, un train de roues unique comprenant deux roues 12 coaxiales montées de part et d'autre du plateau 11 le long des grands côtés de celui-ci et un timon 15 en saillie du plateau 11 au milieu d'un petit côté du plateau 11 définissant l'avant de la remorque 1. Le timon 15 comprend une tête 151 d'attelage permettant de mouvoir la remorque 1, par exemple en fixant cette tête 151 d'attelage à un véhicule tracteur. Les roues 12 sont disposées de sorte à être apte à tourner autour d'un axe P3 perpendiculaire à la direction horizontale définie par le timon 15.

Le plateau 11 est destiné à recevoir des objets et/ou des matériaux afin de les transporter.

Selon le mode de réalisation représenté, le plateau 11 comprend un cadre 111 périphérique et un plancher 112 de préférence en tôle.

Selon le mode de réalisation illustré, la remorque 1 est apte à transporter deux motocyclettes. Pour ce faire, la remorque 1 comprend sur son plateau 11 deux supports 113 destinés à bloquer chacun la roue avant d'une motocyclette disposée sur la remorque 1. La remorque 1 comprend également des moyens 114 d'attache permettant de sangler les motocyclettes ou tout autre objet disposé sur la remorque 1.

La remorque 1 comprend une roue 16 jockey solidaire du timon 15. La roue 16 jockey peut prendre deux positions : une position déployée de sorte à soutenir le timon 15 par appui sur le sol S lorsque cela est nécessaire, notamment lorsque la remorque n'est pas attachée à un véhicule tracteur, et une position rétractée en sorte de ne pas gêner la manoeuvre de la remorque en situation de roulage.

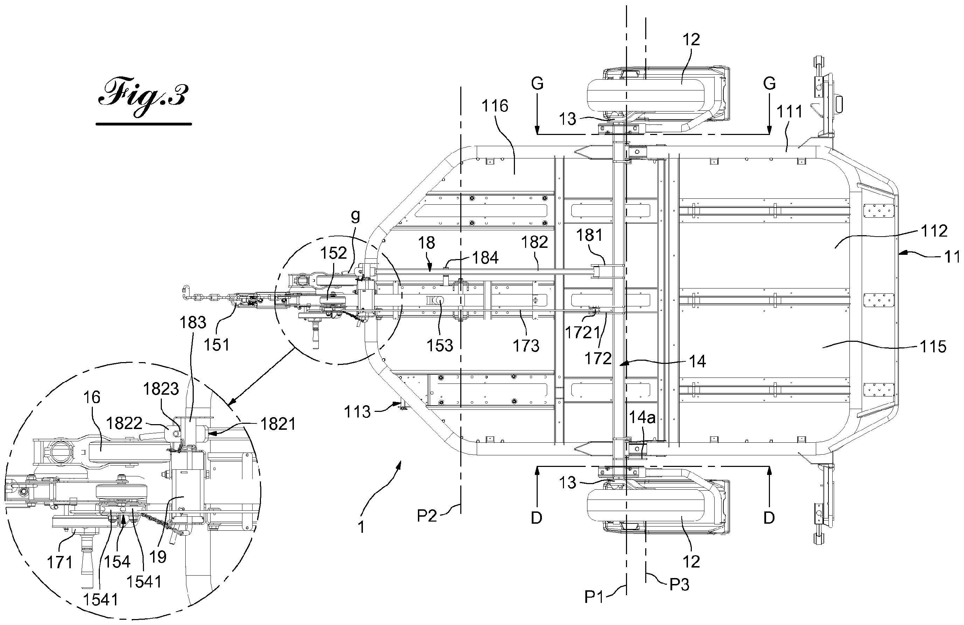

Comme on peut le voir sur la figure 3, selon le mode de réalisation représenté, la remorque 1 comprend deux bras 13 reliant chacun le moyeu d'une des roues 12 à un essieu 14 fixé sous le plateau 11. L'essieu 14 reçoit à chaque extrémité les bras 13 auxquels sont fixées les roues 12. Les bras 13 sont disposés chacun dans un plan vertical parallèle au timon 15. Les bras 13 déportent l'axe P3 de rotation des roues 12 par rapport à un axe défini par l'essieu 14.

L'essieu 14 est monté en liaison pivot P1 d'axe horizontal avec le plateau 11 de la remorque 1.

La remorque 1 comprend également un système d'inclinaison et de redressement. Ledit système comprend un treuil 171 monté sur le timon 15, au-delà de la limite du plateau, et un levier 172 dont une première extrémité est fixée par encastrement à l'essieu 14 aux environs de la moitié de sa longueur, sous le plateau. Le système d'inclinaison et de redressement comprend de plus un câble 173, métallique (en acier, par exemple) reliant, sous l'avant du plateau, le treuil 171, sur lequel il s'enroule, et la deuxième extrémité du levier 172. Le levier 172 comporte de plus, en cette deuxième extrémité, un rouleau 1721 sur lequel le câble 173 est monté coulissant en sorte de le maintenir éloigné de l'essieu 14 tout en permettant un renvoi angulaire d'une traction appliquée sur le câble 173 par le treuil. Le renvoie angulaire est effectué vers l'avant de la remorque, sous le plateau, et jusqu' à un point d'accroche fixe de l'extrémité du câble, à la partie avant du plateau.

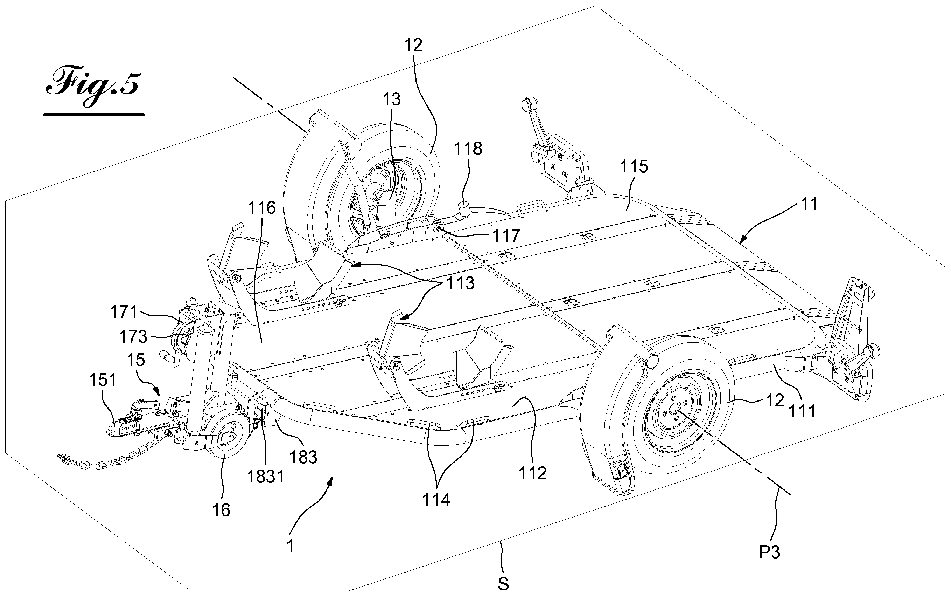

Ce système d'inclinaison et de redressement permet à la remorque 1 d'être convertie d'une position de roulage, dans laquelle son plateau 11 est sensiblement parallèle au sol S, à une position abaissée, dans laquelle le plateau 11 est incliné par rapport au sol S. La position de roulage est illustrée sur les figures 1 à 3, 4A et 4B. La position abaissée est représentée sur les figures 5, 6A, 6B, 8A et 8B.

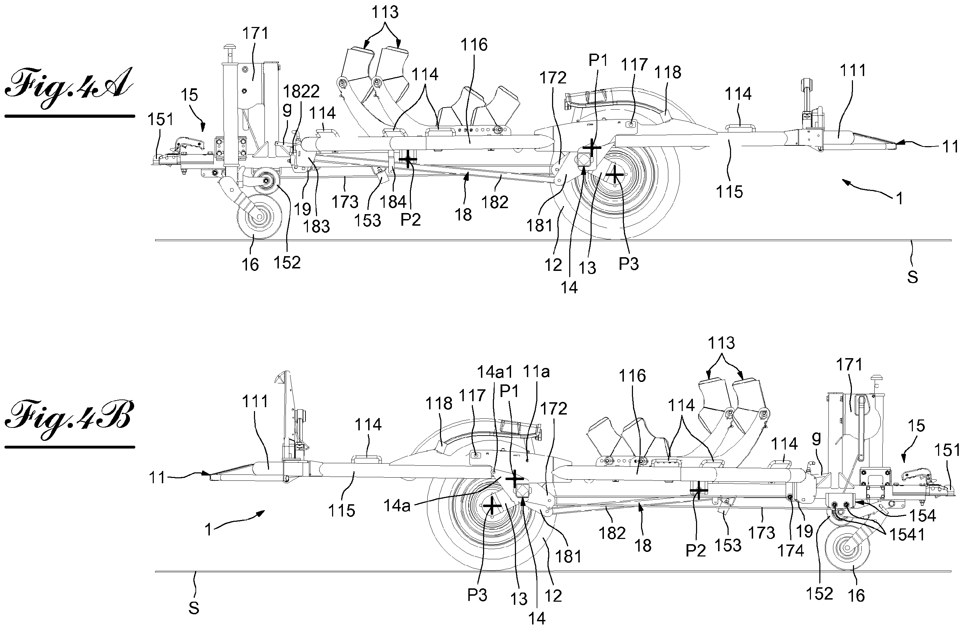

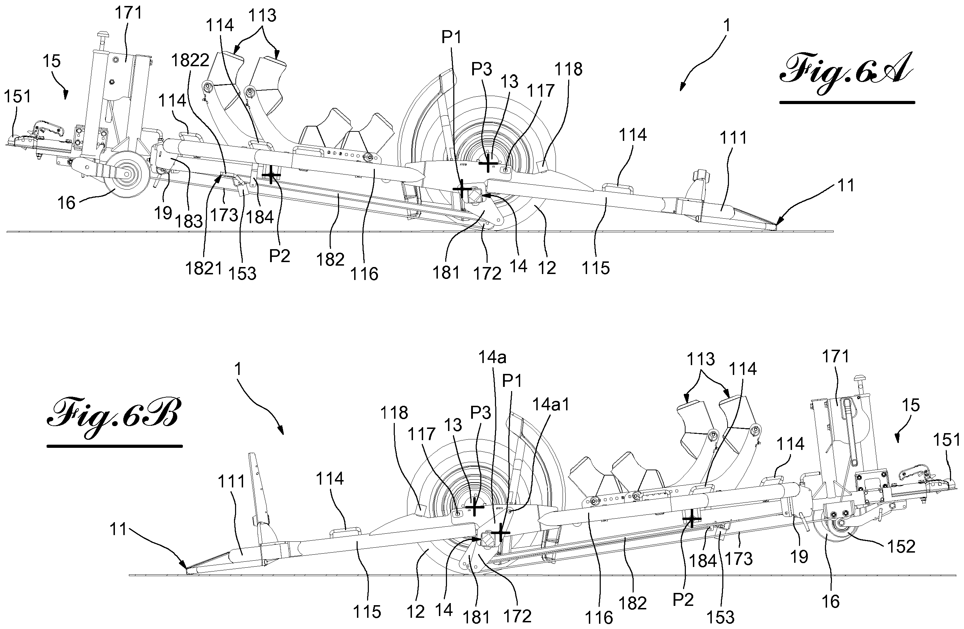

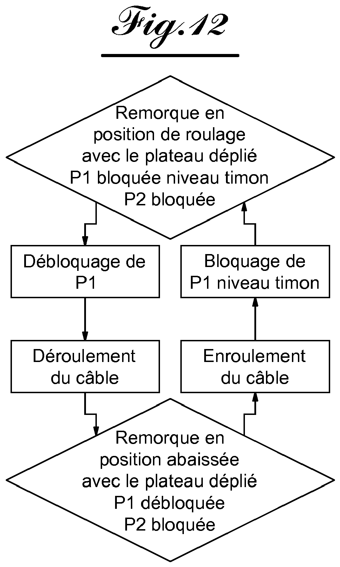

Dans la position de roulage, l'axe P3 de rotation des deux roues 12 n'est pas disposé à la verticale de l'essieu 14. Ainsi, comme illustré sur la figure 12, lorsque la longueur du câble 173 est augmentée, par déroulement du câble 173 depuis le treuil 171, l'essieu 14 pivote par gravité autour de sa liaison pivot P1 avec le plateau 11, sous l'action du poids du plateau 11 combiné au déport de l'axe P3 des roues 12 par les bras 13. Ce pivotement rapproche l'essieu 14 du sol S, dans un mouvement visible en comparant la figure 1 à la figure 5 ou encore les figures 4A, 4B aux figures 6A, 6B. La tête 151 d'attelage du timon 15 reste à une distance du sol S sensiblement fixe, par appui de la roue 16 jockey sur le sol S ou par fixation de la tête 151 d'attelage au véhicule tracteur, et la partie 115 arrière du plateau 11 se rapproche par contre du sol S. La remorque 1 est ainsi convertie de la position de roulage à la position abaissée.

Selon le mode de réalisation illustré, la position abaissée est atteinte lorsque la partie 115 arrière du plateau 11 est au contact du sol S.

A l'inverse, comme illustré sur la figure 12, lorsque la longueur du câble 173 est diminuée, par enroulement du câble sur le treuil 171, le levier 172 fait pivoter l'essieu 14 autour de sa liaison pivot P1 avec le plateau 11. Ce pivotement fait pivoter les bras 13 éloignant l'essieu 14 du sol S, dans un mouvement visible en comparant la figure 5 à la figure 1 ou encore les figures 6A, 6B aux figures 4A, 4B. La tête 151 d'attelage du timon 15 restant à une distance du sol S sensiblement fixe, toujours par appui de la roue 16 jockey sur le sol S ou par fixation de la tête 151 d'attelage au véhicule tracteur, la partie 115 arrière du plateau 11 s'éloigne du sol S jusqu'à ce que la remorque soit en position de roulage.

Selon le mode de réalisation représenté, en position de roulage, les bras 13 sont orientés de sorte que l'axe P3 des roues 12 soit disposé vers l'arrière de la remorque 1 et plus bas que l'essieu 14.

De plus, selon un mode de réalisation, l'essieu 14 comprend une pièce externe fixée au cadre 111 et une pièce interne solidaire de la pièce externe par des amortisseurs. Les bras 13 sont fixés à la pièce interne. Ainsi, en phase de roulage, les bras 13 sollicitent les amortisseurs par le biais de la pièce interne ce qui amorti les vibrations dues au roulage.

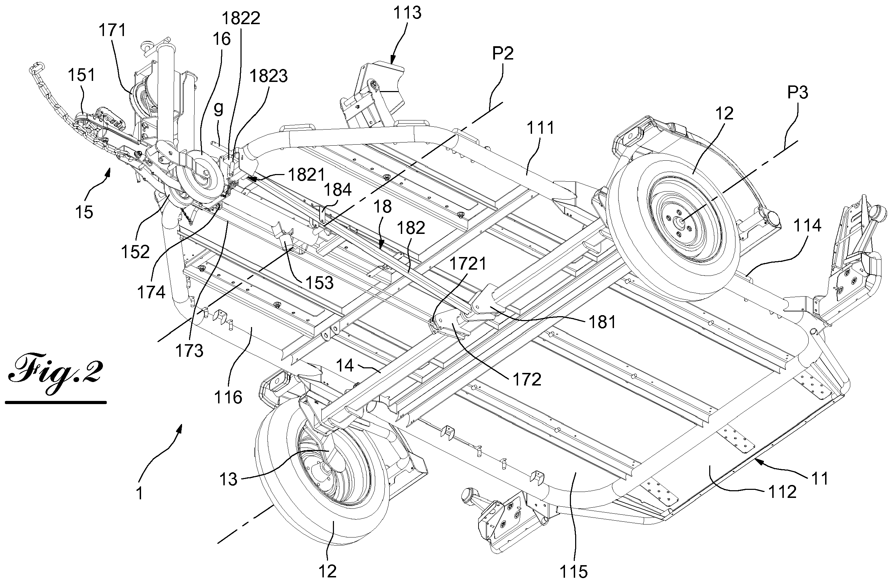

Selon le mode de réalisation illustré, et comme cela est visible en figures 2, 3, 4A et 4B, en position de roulage, le levier 172 est orienté de sorte que le rouleau 1721 du levier 172 soit disposé vers l'avant de la remorque 1 par rapport à l'essieu 14 et plus bas que l'essieu 14.

Ainsi, grâce à l'orientation des bras 13, le rouleau 1721 du levier 172 s'éloigne du treuil 171 et s'abaisse lorsque la remorque est convertie de sa position de roulage à sa position abaissée. Cela est visible en comparant les figures 4A, 4B et 6A, 6B.

L'avantage de la position du levier 172 en position de roulage et de son mouvement pour passer en position abaissée est que le levier 172 ne peut pas entrer en contact avec le plateau 11 ce qui permet de rapprocher l'essieu 14 du plateau 11 de sorte à réduire l'inclinaison du plateau 11 en position abaissée et à abaisser le centre de gravité de la remorque 1.

Selon le mode de réalisation représenté, en particulier sur les figures 4A, 7A et 8A, la remorque comprend un système 18 de verrouillage. Ce système 18 de verrouillage comprend une barre 181 de déport solidaire de l'essieu 14 et une barre 182 de blocage solidaire, en une extrémité, de la barre 181 de déport. La barre 181 de déport éloigne ladite extrémité de la barre 182 de blocage de l'essieu 14. Une autre extrémité de la barre 182 de blocage comprend un moyen 1821 de blocage destiné à coopérer avec un moyen 183 de blocage solidaire du plateau 11 de la remorque 1 lorsque la remorque 1 est en position de roulage.

Ainsi, la liaison pivot P1 entre l'essieu 14 et le plateau 11 est apte à être bloquée au niveau du timon 15 ce qui entraine le verrouillage de la remorque 1 en position de roulage par le système 18 de verrouillage, ce qui permet de réduire la tension du câble 173 en position de roulage.

Selon le mode de réalisation illustré, le moyen 1821 de blocage de la barre 182 de blocage comprend une pièce 1822 plane comportant un trou 1823. Le moyen 183 de blocage solidaire du plateau 11 comprend une fente 1831 destinée à laisser entrer la pièce 1822 plane lorsque la remorque 1 est en position de roulage. Une goupille g est destinée à venir se loger dans le trou 1823 de la pièce 1822 plane lorsqu'elle est dans la fente 1831 empêchant la pièce 1822 plane de ressortir de la fente 1831.

Selon le mode de réalisation illustré, le système 18 de verrouillage comprend une glissière 184 dans laquelle passe la barre 182 de blocage. La glissière 184 maintient la barre 182 de blocage du côté de son moyen 1821 de blocage de sorte que, lorsque la remorque 1 est convertie en position de roulage, la pièce 1822 plane entre automatiquement dans la fente 1831.

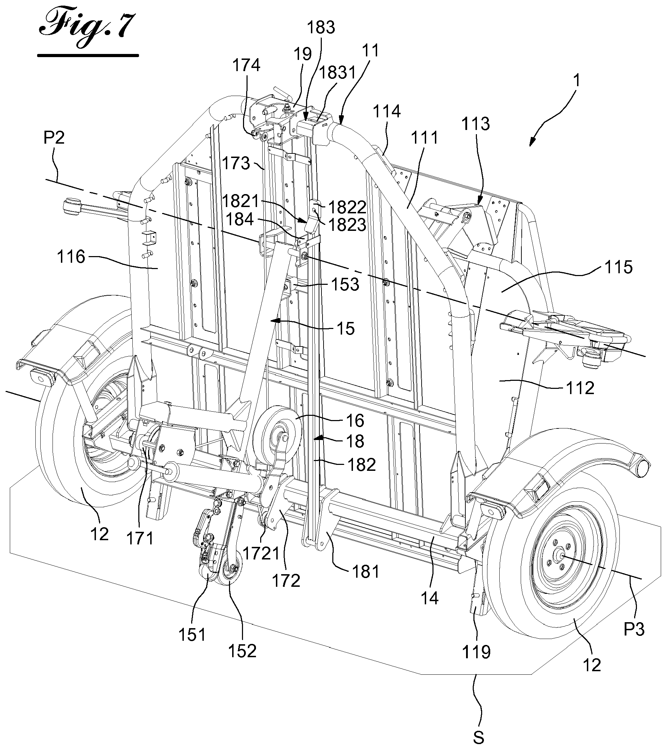

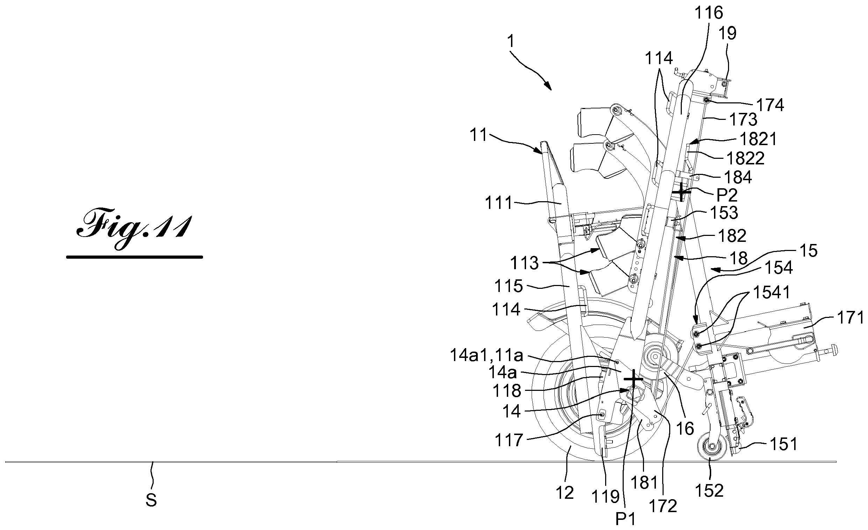

Le système d'inclinaison et de redressement permet également à la remorque 1 de passer de la position abaissée à une position dite redressée, dans laquelle le plateau 11 est sensiblement perpendiculaire au sol S. La position redressée est illustrée sur les figures 7 et 11.

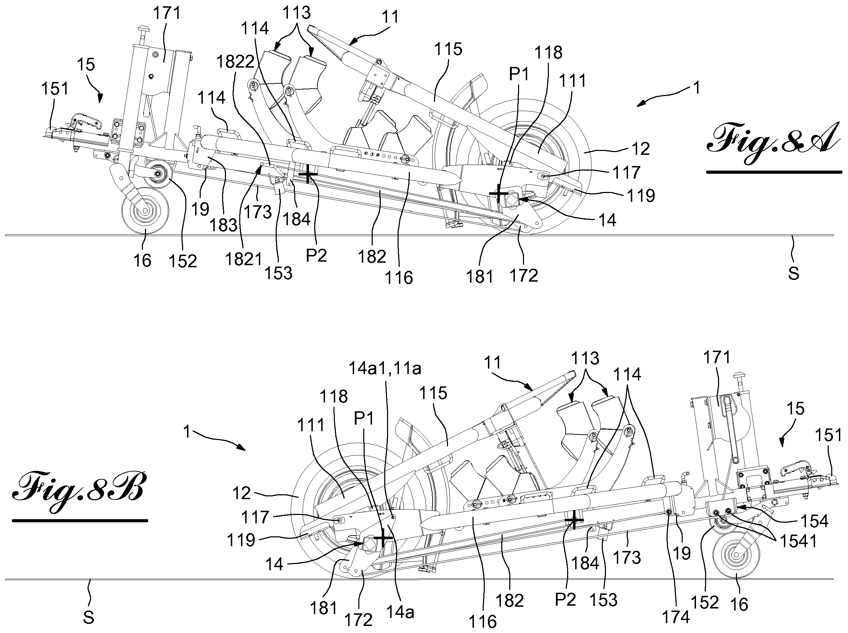

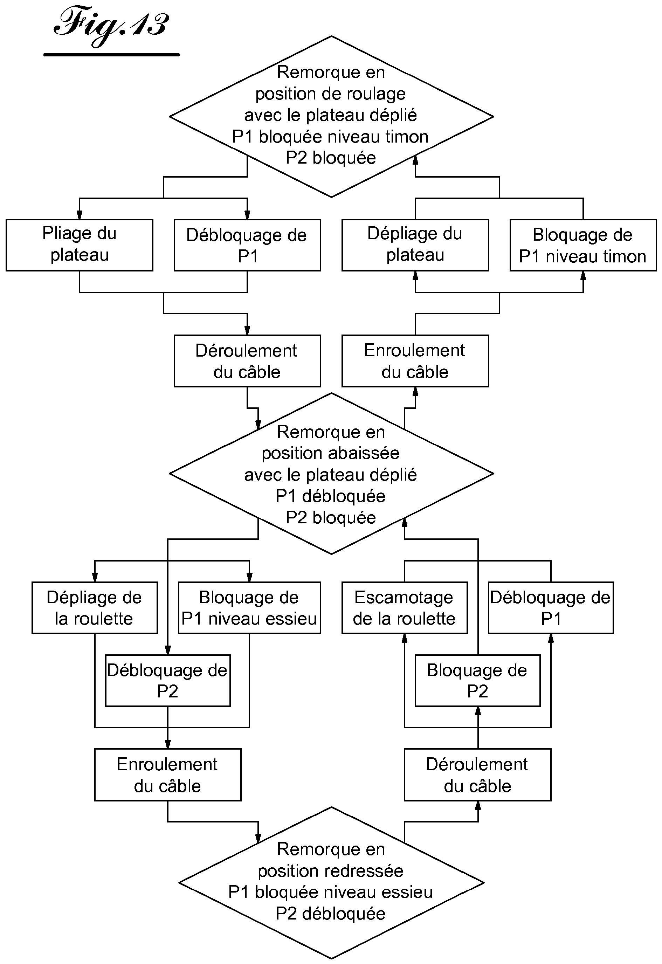

Selon le mode de réalisation représenté, pour convertir la remorque 1 en position redressée, le plateau 11 comprenant une partie 116 avant et une partie 115 arrière mobiles l'une par rapport à l'autre par rotation autour d'un axe 117, la partie 115 arrière du plateau 11 est pliée vers la partie 116 avant du plateau 11, comme représenté sur les figures 8A, 8B et 13. Lorsque le plateau 11 est en position pliée, le plateau 11 ne dépasse pas des roues 12 vers l'arrière de la remorque 1.

Au moins l'une des parties 115, 116 du plateau 11 comprend au moins un tampon 118 définissant, par buttée contre l'autre des parties 115, 116, la position pliée du plateau 11. Le tampon 118 permet que les deux parties 115, 116 du plateau 11 ne soient pas en contact direct de sorte à ne pas abîmer le plateau 11. Le plateau 11 est de préférence maintenu en position pliée au moyen d'une sangle (non représentée).

Selon le mode de réalisation illustré, la partie 115 arrière du plateau 11 comprend au moins une patte 119 en saillie vers l'avant de la remorque 1 à partir de l'axe 117 de rotation du plateau 11. Cette patte 119 est destinée à définir, par un effet de butée, la position dépliée du plateau 11 par contact entre la patte 119 et la partie 116 avant du plateau 11. Cette patte 119 est apte à être solidarisée à la partie 116 avant du plateau 11 afin de maintenir le plateau 11 en position dépliée.

Selon le mode de réalisation illustré, le plateau 11 ne peut être converti vers sa forme pliée que lorsque la remorque 1 est en position de roulage sinon la patte 119 entre en contact avec l'essieu 14 ce qui bloque la rotation de la partie 115 arrière du plateau 11 et donc le pliage du plateau 11. Pour atteindre la forme plateau 11 plié et remorque inclinée, il convient donc, selon le mode de réalisation représenté, en particulier sur la figure 13, de d'abord plier le plateau 11, et seulement ensuite d'abaisser la remorque 1.

La position abaissée de la remorque 1 est atteinte en suivant les mêmes étapes que lorsque le plateau 11 est déplié.

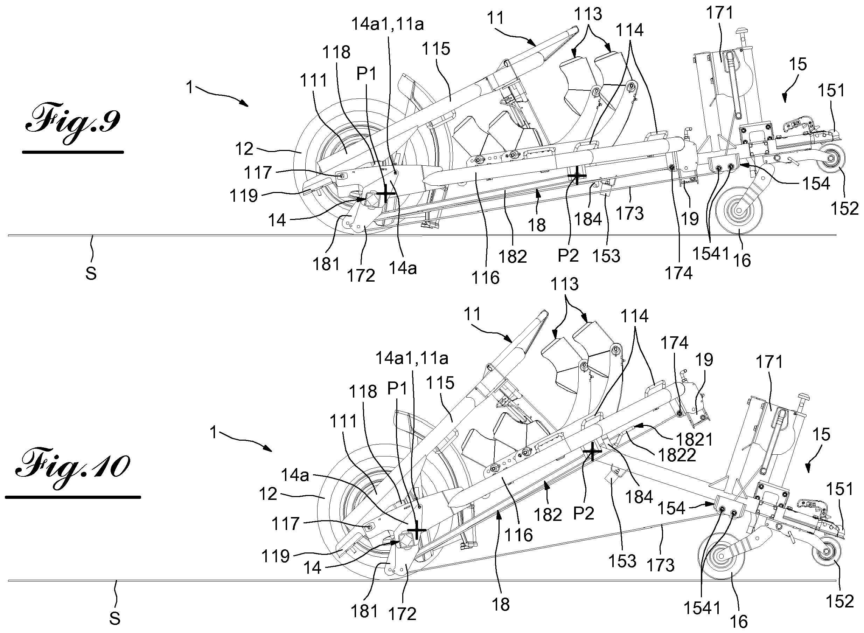

Une fois le plateau 11 en position pliée et la remorque 1 en position abaissée, comme représenté sur les figures 8A et 8B, pour redresser la remorque 1, une roulette 152 montée sous le timon 15 et qui était jusque-là escamotée est dépliée et disposée en avant de la tête 151 d'attelage, comme représenté sur la figure 9. Par ailleurs, une mâchoire 19 bloquant le timon 15 contre le plateau 11 est ouverte, comme représenté sur la figure 9.

Plus précisément, selon le mode de réalisation représenté, la roulette 152 est apte à passer d'une position escamotée en arrière de la tête 151 d'attelage à une position en avant de la tête 151 d'attelage par rotation sous le timon 15.

Le timon 15 est de plus articulé au plateau 11 par un axe P2 de rotation définissant une liaison pivot parallèle à l'essieu 14. Cet axe P2 est disposé à une extrémité du timon 15 opposée à la tête 151 d'attelage et sous le plateau 11. Cet axe P2 est, de préférence, disposé à environ les deux-tiers de la distance entre l'essieu 14 et l'avant du plateau 11, plus proche de l'avant du plateau 11 que de l'essieu 14. La mâchoire 19, solidaire du plateau 11 et placée à l'avant de celui-ci, maintient le timon 15 sensiblement parallèle au plateau 11 et contre celui-ci dans les positions de roulage et abaissée de la remorque 1, en enserrant, de préférence, le timon 15 à environ un tiers de sa longueur en partant de son axe P2 de rotation.

De plus, pour redresser la remorque selon le mode de réalisation illustré, le pivotement de l'essieu 14 par rapport au plateau 11 autour de la liaison pivot P1 est bloqué au niveau de l'essieu 14. Pour ce faire, selon le mode de réalisation représenté, l'essieu 14 comprend une plaque 14a de blocage, visible en figures 3, 4B, 6B, 8B et 9 à 11, comportant un trou 14a1. Une goupille (non représentée) est destinée à être insérée dans ce trou 14a1 et dans un trou 11a du plateau 11, lesdits trous 11a, 14a1 étant alignés lorsque la remorque 1 est en position abaissée.

Une fois le plateau 11 en position pliée, la remorque 1 en position abaissée, la roulette 152 disposée en avant de la tête 151 d'attelage, la mâchoire 19 ouverte et le pivotement de l'essieu 14 par rapport au plateau 11 bloqué, le redressement de la remorque 1 se fait par enroulement du câble 173 sur le treuil 171.

La figure 10 représente la remorque 1 en début de redressement et la figure 11 représente la remorque en position redressée.

Comme on peut le voir sur la figure 10, lors du redressement, la longueur du câble 173 entre le treuil 171 et le rouleau 1721 du levier 172 diminuant, le timon 15 pivote autour de sa liaison pivot P2 avec le plateau 11. Le plateau 11 ne dépassant pas des roues 12 vers l'arrière de la remorque 1, le plateau 11 pivote sur les roues 12, autour de leur axe P3 de rotation, et le timon 15 repose, dans un premier temps, sur la roue 16 jockey.

Dans un second temps, le timon 15, continuant à pivoter, repose sur la roulette 152, la roue 16 jockey ne touchant plus le sol S, comme représenté sur la figure 11.

En position redressée, la remorque 1 repose sur ses roues 12 et sur la roulette 152 permettant de la déplacer facilement.

Pour convertir la remorque 1 de la position redressée à la position de roulage, les mêmes étapes en sens inverse sont réalisées, comme représenté sur la figure 13.

Selon le mode de réalisation représenté, le timon 15 comprend un tampon 153 définissant, par buttée contre le plateau 11, la position redressée de la remorque 1. Ce tampon 153 permet que le timon 15 et le plateau 11 ne soient pas en contact direct de sorte à ne pas les abîmer.

Selon le mode de réalisation représenté, le treuil 171 est disposé au-dessus du timon 15, lorsque la remorque est en position de roulage ou en position abaissée. La remorque 1 comprend une poulie 154 comportant deux rouleaux 1541 alignés sensiblement suivant une direction définie par le timon 15 et entre lesquels passe le câble 173.

Ainsi, le treuil 171 est plus facile d'accès et le dessous de la remorque 1 est moins encombré.

Le rouleau 1541 de la poulie disposé vers l'arrière de la remorque 1 permet de guider le câble 173 entre le treuil 171 et le levier 172 lorsque la remorque 1 est en position de roulage, en position abaissée et au début du redressage de la remorque 1, comme représenté sur les figures 3, 4B, 6B, 8B, 9 et 10.

Le rouleau 1541 de la poulie disposé vers l'avant de la remorque 1 permet de guider le câble 173 entre le treuil 171 et le levier 172 lorsque la remorque 1 est en fin de redressement et en position redressée, comme représenté sur la figure 11. Ce rouleau 1541 avant est nécessaire, dans le mode de réalisation illustré, car, en position redressée, le treuil 171 est plus éloigné du sol S que le levier 172.

Selon le mode de réalisation représenté, en particulier sur les figures 4B, 6B, 8B et 9 à 11, le système d'inclinaison et de redressement comprend également un ancrage 174 de l'extrémité du câble 173 solidaire de l'avant du plateau 11. Ainsi, le câble 173 est fixé, par ses deux extrémités, au treuil 171 et à l'ancrage 174 et le câble 173 passe par le rouleau 1721 du levier 172.

Cet ancrage 174 permet de diviser par deux la force à fournir, au niveau du treuil 171, pour compenser la force requise au niveau du levier 172 pour faire pivoter l'essieu 14.

Selon des modes de réalisation différents, la remorque 1 comprend des parois délimitant latéralement le plateau 11 et/ou d'autres moyens d'attache et/ou supports.

Selon des modes de réalisation différents, la position abaissée est atteinte lorsque l'axe P3 des roues 12 est sensiblement à la verticale de l'essieu 14.

Selon des modes de réalisation différents, la remorque 1 ne comprend pas d'essieu 14 et les bras 13 sont directement montés sous le plateau 11 de la remorque 1.

Selon des modes de réalisation différents, la remorque 1 est convertie de la position de roulage à la position redressée sans passer par la position abaissée.

A la place du câble 173 en acier, on peut utiliser un câble dans un autre matériau, une chaîne, une corde ou une sangle.

Cette remorque 1 permet ainsi de faciliter son chargement et son déchargement tout en réduisant son encombrement lors de son stockage en ne sollicitant que très peu l'utilisateur.

## Revendications

1. Remorque (1) comprenant un plateau (11) de transport, des roues (12), un timon (15) en liaison pivot du timon (P2) avec le plateau (11), la liaison pivot du timon (P2) étant parallèle aux axes (P3) des roues (12) et permettant le repliement du timon contre la surface inférieure du plateau, la remorque (1) comprenant en outre un moyen (19) de blocage et déblocage de la liaison pivot du timon (P2) et un système de conversion comprenant un moyen de traction (171, 173) du plateau (11) définissant une distance du plateau (11) au sol (S) par pivotement du plateau (11) autour d'une liaison pivot de chargement et déchargement (P1) parallèle aux axes (P3) des roues, la remorque (1) étant de plus apte à être disposée dans une position redressée, la remorque (1) étant **caractérisée en ce qu'**un dispositif (171) de commande du moyen de traction est monté sur le timon (15).

2. Remorque (1) selon la revendication précédente, **caractérisée en ce qu'**elle comprend des bras (13), chaque bras (13) solidarisant une des roues (12) au plateau (11), les bras (13) étant relié par la liaison pivot de chargement et déchargement (P1) avec le plateau (11), la liaison pivot de chargement et déchargement (P1) étant différente des axes (P3) des roues (12), la remorque (1) comprenant en outre un moyen (11a, 14a) de blocage de la liaison pivot de chargement et déchargement (P1).

3. Remorque (1) selon l'une quelconque des revendications précédentes, **caractérisée en ce qu'**elle comprend une poulie (154) solidaire du timon (15), la poulie (154) comportant deux rouleaux (1541) disposés successivement suivant la direction de saillie du timon (15), le moyen de traction (173) passant entre les deux rouleaux (1541) en sorte d'être couplé à l'un ou l'autre.

4. Remorque (1) selon l'une quelconque des revendications précédentes, **caractérisée en ce qu'**elle comprend une roulette (152) solidaire du timon (15), la roulette (152) étant apte à être escamotée entre les extrémités du timon (15) ou à être dépliée à l'extrémité du timon (15) opposée au plateau (11) pour servir d'appui.

5. Remorque (1) selon l'une quelconque des revendications précédentes, **caractérisée en ce que** le plateau (11) comprend une partie (115) arrière et une partie (116) avant mobiles l'une par rapport à l'autre par rotation autour d'un axe de pliage (117), l'axe de pliage (117) étant disposé entre le timon (15) et la partie des roues (12) la plus éloignée du timon (15).

6. Remorque (1) selon l'une quelconque des revendications précédentes, **caractérisée en ce que** le moyen de traction (171, 173) du plateau (11) comprend un câble métallique et le dispositif (171) de commande dudit moyen de traction (171, 173) est un treuil (171).

7. Remorque (1) selon l'une quelconque des revendications précédentes, **caractérisée en ce que** le moyen de blocage et déblocage du timon est une mâchoire placée à l'avant du plateau.

8. Procédé de conversion d'une remorque (1) selon l'une des revendications 1 à 7 entre une position de roulage dans laquelle des roues (12) de la remorque (1) reposent sur le sol (S), une position abaissée dans laquelle au moins une partie d'un plateau (11) de la remorque (1) est plus proche du sol (S) que dans la position de roulage, le plateau (11) étant destiné à supporter des objets et/ou des matériaux à transporter, et une position redressée, le procédé comprenant, pour convertir la remorque (1) entre la position de roulage et la position abaissée, une variation d'une longueur d'un moyen de traction (173) de la remorque (1), le procédé étant **caractérisé en ce qu'**il comprend, pour convertir la remorque (1) de la position de roulage vers la position abaissée, un blocage d'une liaison pivot du timon (P2) d'un timon (15) de la remorque (1) avec un plateau (11) de la remorque (1), le timon (15) s'étendant suivant une direction perpendiculaire à ladite liaison pivot du timon (P2), et **en ce qu'**il comprend, pour convertir la remorque (1) vers la position redressée, un déblocage de ladite liaison pivot du timon (P2) et une modification de la longueur du moyen de traction (173).

9. Procédé de conversion selon la revendication précédente, **caractérisé en ce qu'**il comprend en outre, pour convertir la remorque vers la position redressée, une disposition d'une roulette (152) à l'extrémité du timon (15) opposée au plateau (11) et une réduction de la longueur du moyen de traction (173) et **en ce qu'**il comprend, pour convertir la remorque depuis la position redressée, une augmentation de la longueur du moyen de traction (173), une disposition de la roulette (152) entre les extrémités du timon (15) et le blocage de la liaison pivot du timon (P2).

10. Procédé de conversion selon l'une quelconque des revendications 7 ou 8, **caractérisé en ce qu'**il comprend, pour convertir la remorque vers la position redressée, un pliage préalable d'une partie (115) arrière et d'une partie (116) avant du plateau (11) l'une contre l'autre, des roues (12) de la remorque (1) dépassant du plateau (11) à l'opposé du timon (15), le pliage d'une partie (115) arrière et d'une partie (116) avant du plateau (11) l'une contre l'autre étant réalisé lorsque la remorque (1) est en position de roulage.

## Patentansprüche

1. Anhänger (1), umfassend ein Transportdeck (11), Räder (12), eine Deichsel (15) in Schwenkverbindung der Deichsel (P2) mit dem Deck (11), wobei die Schwenkverbindung der Deichsel (P2) parallel zu den Achsen (P3) der Räder (12) ist und das Zurückziehen der Deichsel gegen die untere Fläche des Decks ermöglicht, wobei der Anhänger (1) außerdem ein Mittel (19) zum Blockieren und Lösen der Schwenkverbindung der Deichsel (P2) und ein System zum Überführen umfasst, umfassend ein Zugmittel (171, 173) des Decks (11), das eine Distanz des Decks (11) zum Boden (S) durch Schwenken des Decks (11) um eine Schwenkverbindung zum Laden und Entladen (P1) parallel zu den Achsen (P3) der Räder definiert, wobei der Anhänger (1) außerdem dazu in der Lage ist, in einer aufgerichteten Position angeordnet zu sein, wobei der Anhänger (1) **dadurch gekennzeichnet ist, dass** eine Vorrichtung (171) zur Steuerung des Zugmittels auf der Deichsel (15) montiert ist.

2. Anhänger (1) nach dem vorhergehenden Anspruch, **dadurch gekennzeichnet, dass** er Arme (13) umfasst, wobei jeder Arm (13) eines der Räder (12) fest mit dem Deck (11) verbindet, wobei die Arme (13) durch die Schwenkverbindung zum Laden und Entladen (P1) mit dem Deck (11) verbunden sind, wobei die Schwenkverbindung zum Laden und Entladen (P1) verschieden von den Achsen (P3) der Räder (12) ist, wobei der Anhänger (1) außerdem ein Mittel (11a, 14a) zum Blockieren der Schwenkverbindung zum Laden und Entladen (P1) umfasst.

3. Anhänger (1) nach einem der vorhergehenden Ansprüche, **dadurch gekennzeichnet, dass** er eine Riemenscheibe (154) umfasst, die fest mit der Deichsel (15) verbunden ist, wobei die Riemenscheibe (154) zwei Rollen (1541) umfasst, die aufeinanderfolgend gemäß der Ausgangsrichtung der Deichsel (15) angeordnet sind, wobei das Zugmittel (173) zwischen den zwei Rollen (1541) verläuft, um an das eine oder das andere gekoppelt zu sein.

4. Anhänger (1) nach einem der vorhergehenden Ansprüche, **dadurch gekennzeichnet, dass** er ein Rad (152) umfasst, das fest mit der Deichsel (15) verbunden ist, wobei das Rad (152) dazu ausgelegt ist, zwischen den Enden der Deichsel (15) eingefahren zu sein oder am Ende der Deichsel (15) gegenüber dem Deck (11) ausgefahren zu sein, um als Auflage zu dienen.

5. Anhänger (1) nach einem der vorhergehenden Ansprüche, **dadurch gekennzeichnet, dass** das Deck (11) einen hinteren Teil (115) und einen vorderen Teil (116) umfasst, die untereinander durch Rotation um eine Biegeachse (117) beweglich sind, wobei die Biegeachse (117) zwischen der Deichsel (15) und dem Teil der Räder (12), der am weitesten von der Deichsel (15) entfernt ist, angeordnet ist.

6. Anhänger (1) nach einem der vorhergehenden Ansprüche, **dadurch gekennzeichnet, dass** das Zugmittel (171, 173) des Decks (11) ein metallisches Kabel umfasst und die Vorrichtung (171) zur Steuerung des Zugmittels (171, 173) eine Winde (171) ist.

7. Anhänger (1) nach einem der vorhergehenden Ansprüche, **dadurch gekennzeichnet, dass** das Mittel zum Blockieren und Lösen der Deichsel eine Backe ist, die vor dem Deck platziert ist.

8. Verfahren zum Überführen eines Anhängers (1) nach einem der Ansprüche 1 bis 7 zwischen einer Rollposition, in der Räder (12) des Anhängers (1) auf dem Boden (S) ruhen, und einer abgesenkten Position, in der mindestens ein Teil eines Decks (11) des Anhängers (1) näher am Boden (S) als in der Rollposition ist, wobei das Deck (11) ausgelegt ist, um zu transportierende Gegenstände und/oder Materialien zu tragen, und einer aufgerichteten Position, wobei das Verfahren, zum Überführen des Anhängers (1) zwischen der Rollposition und der abgesenkten Position eine Variation einer Länge eines Zugmittels (173) des Anhängers (1) umfasst, wobei das Verfahren **dadurch gekennzeichnet ist, dass** es, um den Anhänger (1) aus der der Rollposition in die abgesenkte Position überzuführen, ein Blockierung einer Schwenkverbindung der Deichsel (P2) einer Deichsel (15) des Anhängers (1) mit einem Deck (11) des Anhängers (1) umfasst, wobei sich der Anhänger (15) gemäß einer Richtung senkrecht zur Schwenkverbindung der Deichsel (P2) erstreckt, und dadurch, dass es, um den Anhänger (1) in die aufgerichtete Position überzuführen, ein Lösen der Schwenkverbindung der Deichsel (P2) und eine Modifizierung der Länge des Zugmittels (173) umfasst.

9. Verfahren zum Überführen nach dem vorhergehenden Anspruch, **dadurch gekennzeichnet, dass** es außerdem, um den Anhänger in die aufgerichtete Position überzuführen, eine Anordnung einer Rolle (152) am Ende der Deichsel (15) gegenüber dem Deck (11) und eine Reduzierung der Länge des Zugmittels (173) umfasst, und dadurch, dass es, um den Anhänger in die aufgerichtete Position überzuführen, eine Erhöhung der Länge des Zugmittels (173), eine Anordnung der Rolle (152) zwischen den Enden der Deichsel (15) und die Blockierung der Schwenkverbindung der Deichsel (P2) umfasst.

10. Verfahren zum Überführen nach einem der Ansprüche 7 oder 8, **dadurch gekennzeichnet, dass** es, um den Anhänger in die aufgerichtete Position überzuführen, eine vorherige Faltung eines hinteren Teils (115) und eines vorderen Teils (116) des Decks (11) gegeneinander umfasst, wobei Räder (12) des Anhängers (1) das Deck (11) gegenüber der Deichsel (15) überragen, wobei die Faltung eines hinteren Teils (115) und eines vorderen Teils (116) des Decks (11) gegeneinander durchgeführt wird, wenn sich der Anhänger (1) in der Rollposition befindet.

## Claims

1. A trailer (1) comprising a transport deck (11), wheels (12), a draw bar (15) that is in a draw bar pivot connection (P2) with the deck (11), the draw bar pivot connection (P2) being parallel to the axes (P3) of the wheels (12) and allowing the draw bar to be folded back against the lower surface of the deck, the trailer (1) further comprising a means (19) for immobilizing and releasing the draw bar pivot connection (P2) and a converting system comprising a traction means (171, 173) for the deck (11) defining a distance between the deck (11) and the ground (S) by pivoting the deck (11) about a loading and unloading pivot connection (P1) parallel to the axes (P3) of the wheels, the trailer (1) further being able to be arranged in a righted position, the trailer (1) being **characterized in that** a device (171) for controlling the traction means is mounted on the draw bar (15).

2. The trailer (1) according to the preceding claim, **characterized in that** it comprises arms (13), each arm (13) securing one of the wheels (12) to the deck (11), the arms (13) being connected to the deck (11) by the loading and unloading pivot connection (P1), the loading and unloading pivot connection (P1) being different from the axes (P3) of the wheels (12), the trailer (1) further comprising a means (11a, 14a) for immobilizing the loading and unloading pivot connection (P1).

3. The trailer (1) according to any one of the preceding claims, **characterized in that** it comprises a pulley (154) secured to the draw bar (15), the pulley (154) comprising two rollers (1541) arranged successively in the direction of projection of the draw bar (15), the traction means (173) passing between the two rollers (1541) so as to be coupled to one or the other.

4. The trailer (1) according to any one of the preceding claims, **characterized in that** it comprises a caster (152) secured to the draw bar (15), the caster (152) being able to be retracted between the ends of the draw bar (15) or to be unfolded at the end of the draw bar (15) opposite the deck (11) in order to act as a support.

5. The trailer (1) according to any one of the preceding claims, **characterized in that** the deck (11) comprises a rear portion (115) and a front portion (116) which are movable relative to one another by rotation about a folding axis (117), the folding axis (117) being arranged between the draw bar (15) and the portion of the wheels (12) furthest from the draw bar (15).

6. The trailer (1) according to any one of the preceding claims, **characterized in that** the traction means (171, 173) for the deck (11) comprises a metal cable and the device (171) for controlling said traction means (171, 173) is a winch (171).

7. The trailer (1) according to any one of the preceding claims, **characterized in that** the means for immobilizing and releasing the draw bar is a jaw placed in front of the deck.

8. A method of converting a trailer (1) according to one of claims 1 to 7 between a rolling position in which wheels (12) of the trailer (1) rest on the ground (S), a lowered position in which at least one part of a deck (11) of the trailer (1) is closer to the ground (S) than in the rolling position, the deck (11) being intended to support objects and/or materials to be transported, and a righted position, the method comprising, in order to convert the trailer (1) between the rolling position and the lowered position, varying a length of a traction means (173) of the trailer (1), the method being **characterized in that** it comprises, in order to convert the trailer (1) from the rolling position to the lowered position, immobilizing a draw bar pivot connection (P2) of a draw bar (15) of the trailer (1) to a deck (11) of the trailer (1), the draw bar (15) extending in a direction perpendicular to said draw bar pivot connection (P2), and **in that** it comprises, in order to convert the trailer (1) to the righted position, releasing said draw bar pivot connection (P2) and modifying the length of the traction means (173).

9. The conversion method according to the preceding claim, **characterized in that** it further comprises, in order to convert the trailer to the righted position, arranging a caster (152) at the end of the draw bar (15) opposite the deck (11) and reducing the length of the traction means (173), and **in that** it comprises, in order to convert the trailer from the righted position, increasing the length of the traction means (173), arranging the caster (152) between the ends of the draw bar (15), and immobilizing the draw bar pivot connection (P2) .

10. The conversion method according to any one of claims 7 or 8, **characterized in that** it comprises, in order to convert the trailer to the righted position, pre-folding a rear portion (115) and a front portion (116) of the trailer deck (11) against one another, wheels (12) of the trailer (1) projecting from the deck (11) opposite the draw bar (15), a rear portion (115) and a front portion (116) of the deck (11) being folded against one another when the trailer (1) is in a rolling position.
